# EUROPÄISCHE PATENTSCHRIFT

(11) **EP 2 443 720 B1**
(45) Veröffentlichungstag und Bekanntmachung des Hinweises auf die Patenterteilung: **23.11.2016**
(21) Anmeldenummer: 10715264.7
(22) Anmeldetag: 27.04.2010
(51) Int. Cl.: H01M 10/44, H02J 7/00

(54) **ENERGIESPEICHER-LADESYSTEM**
ENERGY ACCUMULATOR CHARGING SYSTEM
SYSTÈME DE CHARGEMENT D'ACCUMULATEURS D'ÉNERGIE

(30) Priorität: 17.06.2009 DE 102009025132
(43) Veröffentlichungstag der Anmeldung: 25.04.2012
(73) Patentinhaber: Bayerische Motoren Werke Aktiengesellschaft, 80809 München (DE)
(72) Erfinder: WILDE, Andreas, 81543 München (DE); SCHARNER, Sebastian, 82299 Türkenfeld (DE); SANDER, Magnus, 80809 München (DE)
(86) Internationale Anmeldenummer: PCT/EP2010/055638
(87) Internationale Veröffentlichungsnummer: WO 2010/145874

(56) Entgegenhaltungen:
- EP-A1- 1 932 740
- EP-A2- 1 648 048
- WO-A1-2008/128416
- WO-A2-2009/007162
- DE-A1- 10 312 591
- FR-A1- 2 891 774
- US-A- 5 659 240
- US-A- 5 892 346
- US-A1- 2005 274 553
- US-A1- 2007 112 475
- US-A1- 2009 021 218

## Beschreibung

Die Erfindung betrifft ein Energiespeicher-Ladesystem, insbesondere für zumindest teilweise elektrisch angetriebene Fahrzeuge.

Die Li-Ionen-Stromspeichertechnologie wird in der nahen Zukunft rein elektrisch betriebene Fahrzeuge mit einer maximalen Reichweite von zwischen ca. 150 km und 300 km ermöglichen. Diese maximale Reichweite wird jedoch nur erreicht, wenn nahezu der gesamte Energieinhalt einer dazu vorgesehenen Antriebsbatterie zum Antrieb eines Elektromotors genutzt wird, was einer Tiefe der zugehörigen Lade- und Entladezyklen (DoD; "Depth of Discharge") von ca. 80 % entspricht. Aus Kosten-, Bauraum- und Gewichtsgründen wird prozentual nicht weniger Energie genutzt.

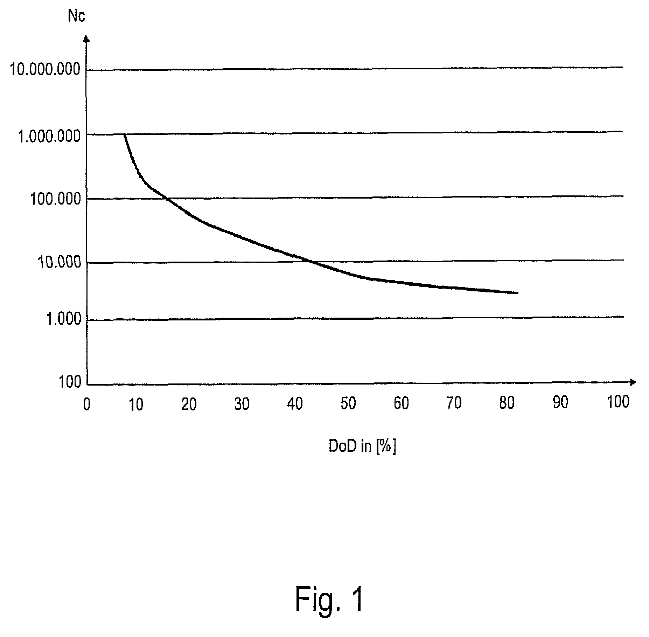

Es ist bekannt, dass eine Lebensdauer von Li-Ionen-Batterien mit der Tiefe der Lade- und Entladezyklen stark abnimmt. Dazu zeigt Fig. 1 ein Diagramm mit der mittleren erreichbaren Zahl Nc an Lade- und Entladezyklen auf der Ordinate, aufgetragen gegen die Tiefe der Lade- und Entladezyklen (DoD) in % auf der Abszisse, und zwar für eine Li-Ionen-Batterie bei 25 °C. Eine häufig gewünschte Lebensdauer der Li-Ionen-Batterie von ca. 10 Jahren im Fahrzeugbetrieb kann daher bisher nur schwer gewährleistet werden, vor allem bei Kunden, die ihr Fahrzeug jeweils erst nach der vollständigen Entladung wieder aufladen.

Außerdem wirkt sich ein vollständig geladener Zustand der Li-Ionen-Batterie negativ auf ihre Lebensdauer aus. Die Lebensdauer der Li-Ionen-Batterie steigt folglich, wenn der Betrieb der Li-Ionen-Batterie in der Nähe ihrer Ladeschlussspannung vermieden wird.

Bei Autobenutzern, die mit ihrem Ladeverhalten unwissentlich die Batterielebensdauer verkürzen, indem sie beispielsweise häufig den gesamten Energiehub der Li-Ionen-Batterie ausnutzen, ist mit hohen Gewährleistungskosten für die Hersteller von elektrisch angetriebenen Fahrzeugen zu rechnen, da die Li-Ionen-Batterie je nach verwendeter Zelltechnologie maximal nur etwa 1500 Vollzyklen standhält, wie auch aus Fig. 1 ableitbar. Die gewünschte Lebensdauer von 10 Jahren ist unter den geschilderten Zyklisierungsbedingungen in Verbindung mit Alterungseffekten aufgrund von Temperaturschwankungen sowie bei einer zusätzlichen Zyklisierung aufgrund einer Energierückgewinnungsfunktion beim Fahren nur schwer erreichbar.

Aus der US2009/021218 A1 ist ein Energiespeicher-Ladesystem für ein Fahrzeug bekannt.

Aus der WO2009/007162 ist eine Ladegerätvorrichtung bekannt zum Laden eines Akkumulators, mit einer Ladestromversorgungseinheit, die in mehreren Lademodi betreibbar ist.

Aus der US5892346 A ist ein Kraftfahrzeug mit einer Batterie bekannt.

Die Aufgabe der Erfindung besteht darin, die vorstehend genannten Nachteile zu vermeiden und insbesondere eine Möglichkeit anzugeben, eine Lebensdauer einer Batterie zum Antrieb eines Fahrzeugs zu verlängern.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Energiespeicher-Ladesystem für ein Fahrzeug vorgeschlagen, welches zumindest für eine Verlängerung einer Lebensdauer mindestens eines Fahrzeug-Energiespeichers eingerichtet ist. In anderen Worten wird ein Energiespeicher-Ladesystem dazu verwendet, um mindestens einen Fahrzeug-Energiespeicher so aufzuladen oder einen Benutzer dabei zu unterstützen, dass im Vergleich zu einer unkontrollierten Aufladung eine Verlängerung einer Lebensdauer erreicht wird. Das Energiespeicher-Ladesystem (das auch als "Assistenzsystem" oder "intelligenter Lademanager" bezeichnet werden kann) birgt große Kosteneinsparpotenziale, da die Anzahl der Gewährleistungsfälle aufgrund einer eingeschränkten Lebensdauer deutlich reduziert werden kann. Zudem können Anforderungen an Zulieferer für die Energiespeicherzellen und deren Lebensdauer herabgesetzt werden und dadurch Kosten im Einkauf eingespart werden.

Weiterhin könnten Zelltechnologien, die bisher ausschließlich aufgrund ihrer relativ kurzen Lebensdauer nicht näher betrachtet wurden, wieder in die engere Wahl für den Fahrzeugeinsatz kommen. Dadurch können sich Vorteile beispielsweise bezüglich Gewicht, Package, Leistungs- oder Energiedichte ergeben.

Das Energiespeicher-Ladesystem kann in einen Bordcomputer integriert sein.

Das Fahrzeug kann ein vollständig oder teilweise elektrisch betriebenes Fahrzeug sein. Der Fahrzeug-Energiespeicher kann insbesondere mindestens eine Li-Ionen-Zelle umfassen.

Der nutzbare Energiebereich kann insbesondere von einem Alterungsgrad des Energiespeichers abhängen. Der Alterungsgrad des Energiespeichers kann beispielsweise aus einer Messung oder einer Schätzung seines Innenwiderstands und / oder einer geschätzten oder gemessenen Gesamtkapazität des Energiespeichers bestimmt werden. Mit steigendem Alterungsgrad kann das Energiespeicher-Ladesystem beispielsweise die maximal zulässige Zyklisierungstiefe, die obere Grenze des Ladezustands verringern und / oder die untere Grenze des Ladezustands erhöhen oder auch die maximale Ladeleistung einschränken. Dies verlangsamt den weiteren Alterungsprozess des Speichers.Teil der Erfindung ist es, dass das Energiespeicher-Ladesystem dazu eingerichtet ist, die folgenden Schritte auszuführen: Abfragen eines Zeitpunkts eines Beginns einer nächsten Fahrt und vollständiges Aufladen des Energiespeichers erst kurz vor Beginn der nächsten Fahrt. Dadurch kann die Zeitdauer des vollständig geladenen Zustands klein gehalten werden.

Teil der Erfindung ist es ist es, dass das Energiespeicher-Ladesystem dazu eingerichtet ist, den folgenden Schritt auszuführen: Abgeben einer Empfehlung zum Abstellen des Fahrzeugs an einer bestimmten Ladestation, wobei das Energiespeicher-Ladesystem mit einem digitalen Kartensystem funktional verbunden ist, welches Informationen zum Ort von Ladestationen aufweist. Dadurch kann eine zur Verringerung der mittleren Zyklisierungstiefe optimale Ladestation ausgewählt werden, ggf. in Abhängigkeit von einer maximalen erlaubten Entfernung von einem gewünschten Zielort oder Heimatort. Das Kartensystem kann beispielsweise ein Navigationssystem mit Informationen zu Orten von Ladestationen sein.

Teil der Erfindung ist es, dass das Energiespeicher-Ladesystem dazu eingerichtet ist, den mindestens einen Fahrzeug-Energiespeicher anhand eines Energiespeicher-Ladeverhaltens (z. B. eines Ladeprofils) aufzuladen, welches zumindest auf die Verlängerung der Lebensdauer des Fahrzeug-Energiespeichers eingerichtet ist. In diesem Fall wird der Ladevorgang durch das Energiespeicher-Ladesystem zumindest mitgesteuert. Dies ergibt ein besonders nutzerfreundliches Energiespeicher-Ladesystem.

Eine Weiterbildung ist es, dass das Energiespeicher-Ladesystem dazu eingerichtet ist, einem Benutzer mindestens eine Empfehlung für ein Energiespeicher-Ladeverhalten zu geben. In diesem Fall führt der Benutzer das Aufladen des Energiespeichers selbst durch und wird durch das Energiespeicher-Ladesystem angeleitet oder unterstützt. Ein solches Energiespeicher-Ladesystem kann besonders einfach ausgeführt sein, da es keine Ladesteuerung zu unterstützen braucht.

Die beiden zuletzt genannten Merkmale können auch kombiniert werden, beispielsweise dergestalt, dass ein bestimmtes Energiespeicher-Ladeverhalten einem Benutzer von dem Energiespeicher-Ladesystem zur Auswahl und / oder Genehmigung angezeigt und nach der Auswahl und / oder Genehmigung mittels des Energiespeicher-Ladesystems zumindest mitgesteuert wird. Dies ergibt ein nutzerfreundliches Energiespeicher-Ladesystem mit einer hohen Nutzermitbestimmung.

Insbesondere ist es eine Weiterbildung, dass das Energiespeicher-Ladesystem dazu eingerichtet ist, bei einem Abstellen des Fahrzeugs eine Empfehlung zum Laden des Energiespeichers zu geben. Eine solche Empfehlung kann beispielsweise ein Aufladen des Energiespeichers bis auf ein Niveau umfassen, welches unterhalb des vollständig geladenen Energieniveaus liegt. Dadurch kann der Betrieb des Energiespeichers in der Nähe seiner Ladeschlussspannung vermieden werden, was die Lebensdauer erhöht. Auch kann so die mittlere Tiefe der Lade- und Entladezyklen reduziert werden, beispielsweise dadurch, dass der Fahrer des Fahrzeugs dazu aufgefordert wird, die Ladung des Energiespeichers durchzuführen, bevor der Energiespeicher vollständig entladen wurde.

Auch ist es eine Weiterbildung, dass das Energiespeicher-Ladesystem dazu eingerichtet ist, die folgenden Schritte auszuführen: Auffordern zur Eingabe einer gewünschten Reichweite bis zu einer nächsten Ladestation und folgend Aufladen des Energiespeichers gerade so weit, dass die Reichweite sicher gewährleistet wird. Dadurch können sowohl die Zyklisierungstiefe des Energiespeichers klein gehalten als auch ein Abstand von dem vollständig geladenen Zustand groß gehalten werden, was die Lebensdauer weiter erhöht. Eine Gewährleistung der Reichweite kann beispielsweise dadurch erreicht werden, dass auf die zur Durchfahrung der eingegebenen Reichweite minimal benötigte Energiemenge ein Zuschlag von z. B. 10 % aufgeschlagen wird, um auch begrenzt Umwege, Staus usw. zu berücksichtigen.

Ferner ist es eine Weiterbildung, dass das Energiespeicher-Ladesystem dazu eingerichtet ist, den folgenden Schritt auszuführen: Zulassen oder Empfehlen einer vollständigen Aufladung des Energiespeichers nur für bestimmte Wochentage oder nur bis zu einer gewissen Zahl an Tagen pro Woche. Das Zulassen kann vorher als eine Option angeboten werden und von einem Benutzer genehmigt oder korrigiert werden. Der Benutzer kann dabei in die Wahl der Wochentage einbezogen werden. Dadurch kann der vollgeladene Zustand zumindest teilweise vermieden werden.

Es ist eine spezielle Weiterbildung, dass die bestimmten Wochentage nutzerabhängig unter der Randbedingung auswählbar sind, dass in einem vorbestimmten Zeitintervall (z. B. einer Woche) ein vorbestimmtes Kontingent an Ladungsenergie nicht überschritten wird. Dadurch kann die zumindest teilweise Vermeidung des vollgeladenen Zustand sicherer erreicht werden und der mittlere Ladungsdurchsatz begrenzt werden.

Eine nächste Weiterbildung besteht darin, dass das Energiespeicher-Ladesystem dazu eingerichtet ist, die folgenden Schritte auszuführen: Auswerten einer Ladehistorie und zumindest teilweise automatisches Erstellen eines an die Ladehistorie angepassten Energiespeicher-Ladeverhaltens, insbesondere Aufladung mit einer Mindestladungsmenge. Die Ladehistorie kann beispielsweise eine durchschnittliche Länge und Zeitpunkte gefahrener Strecken umfassen, z. B. auch unterteilt in bestimmte Kategorien wie Wochentage / Wochenende oder bestimmte Wochentage. Entsprechend kann das Energiespeicher-Ladeverhalten angepasst werden, z. B. an die Länge und Zeitpunkte von Fahrten an einem bestimmten Wochentag. Das Erstellen kann automatisch geschehen oder unter Einbeziehung des Benutzers. Beispielsweise kann eine 60%-ige Aufladung an Werktagen und eine 90%-ige Aufladung an Wochenenden vorgesehen werden.

Es kann dann eine Weiterbildung sein, dass der Schritt des Auswertens der Ladehistorie ein Erkennen mindestens eines bisherigen Ladeverhaltens mit einem negativen Einfluss auf die Lebensdauer umfasst und dass sich an den Schritt des Auswertens der Ladehistorie der folgende Schritt anschließt: Ausgeben mindestens eines Hinweises bezüglich des mindestens einen erkannten Ladeverhaltens mit dem negativen Einfluss auf die Lebensdauer. So kann ein Hinweis angezeigt werden, dass in der Vergangenheit der Energiespeicher wiederholt erst nach einem vollständigen Entladen wieder aufgeladen wurde, was eine hohe Zyklentiefe bewirkt. Gleichzeitig kann einem Nutzer ein Ratschlag angezeigt werden, wie er dieses Ladeverhaltens mit negativem Einfluss vermeiden kann, z. B. der Hinweis, den Energiespeicher besser bereits spätestens nach einer 80 %-igen Entladung wieder aufzuladen.

Eine weitere Ausführungsform besteht darin, dass das Energiespeicher-Ladesystem dazu eingerichtet ist, die folgenden Schritte auszuführen: Priorisieren mindestens zweier Ladeziele und Aufladen des Energiespeichers in Abhängigkeit von der Priorisierung. Je nach Priorisierung des Benutzers kann der Ladevorgang beispielsweise zeitlich derart gesteuert werden, dass die Lebensdauer des Energiespeichers (Ladeziel 1) oder die Stromkosten für die Aufladung (z. B. Tag-/Nachttarif; Ladeziel 2) optimiert werden oder sich ein Kompromiss aus beiden Ladezielen einstellt. Die Priorisierung kann automatisch bzw. voreingestellt oder unter Einbeziehung des Benutzers durchgeführt werden.

Auch ist es eine Ausgestaltung, dass das Energiespeicher-Ladesystem dazu eingerichtet ist, die folgenden Schritte auszuführen: Eingeben einer geplanten Route einer nächsten Fahrt und - insbesondere minimales - Aufladen des Energiespeichers in Abhängigkeit zumindest von einer Länge der geplanten Route. Die Route kann von dem Fahrer beispielsweise bei einem Abstellen des Fahrzeugs eingestellt werden, z. B. über ein Navigationssystem. Auch hierbei kann ein Sicherheitszuschlag zur Berücksichtigung einer Berechnungstoleranz, von Umfahrungen, Staus usw. eingeplant werden.

Eine spezielle Weiterbildung besteht darin, dass der Schritt des Aufladens ein Aufladen des Energiespeichers in Abhängigkeit von mindestens einer energetischen Eigenschaft der geplanten Route, z. B. einem Höhenprofil, durchgeführt wird.

Es ist ferner eine Weiterbildung, dass das Energiespeicher-Ladesystem dazu eingerichtet ist, einen nutzbaren Energiebereich des Energiespeichers einzuschränken oder dessen Einschränkung zu empfehlen. Unter einem nutzbaren Energiebereich kann insbesondere eine nutzbare Zyklisierungstiefe verstanden werden, ggf. einschließlich einer Angabe eines maximalen und / oder eines minimalen Lagegrads des Energiespeichers. Auch kann unter einem nutzbaren Energiebereich eine maximale Ladeleistung verstanden werden.

Die vorstehend genannte Aufgabe wird auch gelöst durch ein entsprechend ablaufendes Verfahren.

Ausführungsbeispiele der Erfindung werden nachfolgend anhand der Zeichnungen schematisch dargestellt und erläutert.

Es zeigen:
- Fig. 2: eine Empfehlung für eine in einem Wochenverlauf zu ladende Ladungsmenge anhand einer Auftragung einer benötigten Reichweite in km oder eines Ladezustands in % gegen die Wochentage;
- Fig. 3: einen möglichen eingestellten Ladeverlauf einer Li-Ionen-Batterie als Auftragung einer Ruhespannung gegen eine Ladungsmenge.

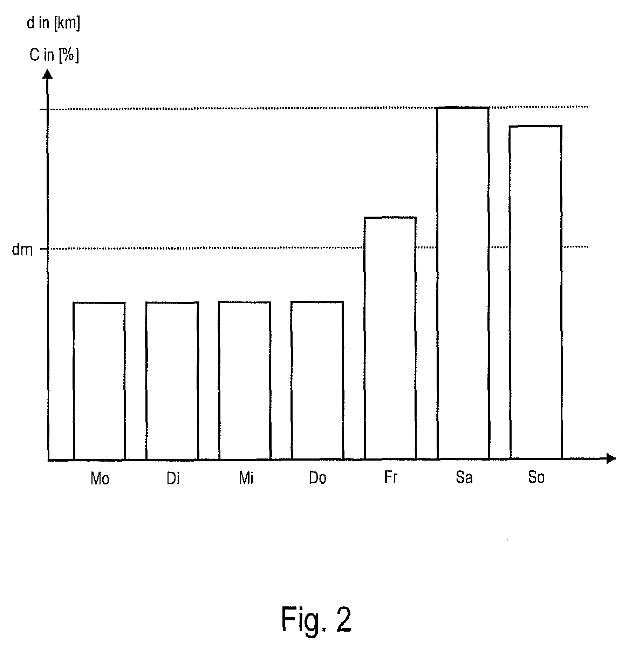

Fig. 2 zeigt eine Empfehlung für eine in einem Wochenverlauf zu ladende Ladungsmenge anhand einer Auftragung einer benötigten Reichweite d in km oder analog eines Ladezustands C in % gegen die Wochentage. Die Balken zeigen für jeden der Wochentage eine von dem Energiespeicher-Ladesystem als notwendig berechnete Reichweite und / oder von dem Benutzer (Fahrer) gewünschte Reichweite. Die für die Wochentage berechnete oder gewünschte Reichweite kann beispielsweise aus einer Ladehistorie für die jeweiligen Wochentage ausgewertet werden. So entspricht die Balkenhöhe der Wochentage Montag (Mo) bis Donnerstag (Do) beispielsweise einer Strecke von einem Wohnort des Benutzers (Fahrers) zur Arbeit. Für den Freitag (Fr) hat der Benutzer die benötigte Reichweite aufgrund eines Kundentermins hochgesetzt. Die zusätzliche Wegstrecke hat der Benutzer mittels eines Navigationssystems bestimmt und an das Energiespeicher-Ladesystem übertragen. Da die für die Wochentage Montag bis Freitag bestimmte durchschnittliche Wegstrecke eine maximal zulässige mittlere Wegstrecke dm, welche den Energiespeicher ausreichend schont, nicht erreicht bzw. unterschreitet, kann an den Wochenenden (Samstag und Sonntag) eine vergleichsweise höhere Wegstrecke bzw. ein dieser Wegstrecke entsprechender Ladezustand empfohlen oder bereitgestellt werden. So mag beispielsweise am Samstag sogar ein voll geladener Ladezustand bzw. eine maximale Wegstrecke empfohlen oder erlaubt werden.

Durch diesen kumulativ über ein Wochenintervall betrachteten Ladezustand bzw. Ladungsmenge zusammen mit einem tageweise aus der Ladungshistorie ausgewerteten realistischen Streckenprofil ergibt sich eine Empfehlung zum Ladeverhalten, hier der täglich maximal erlaubten oder vorgeschlagenen Ladungsmenge, welche die Lebensdauer des Energiespeichers verlängert und eine hohe Nutzertauglichkeit besitzt.

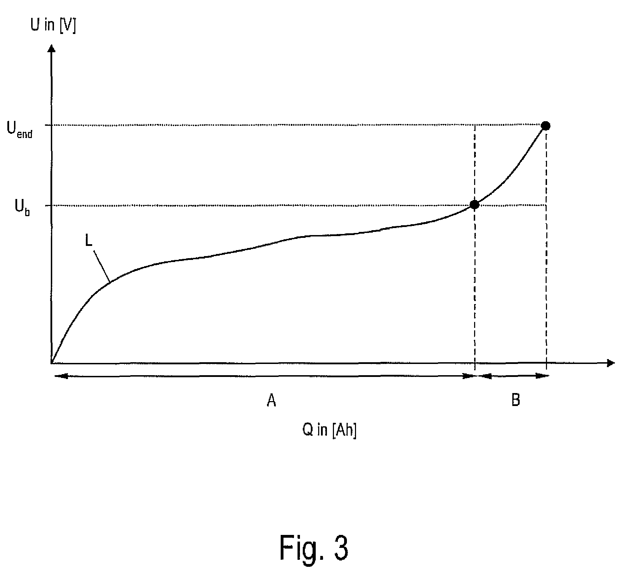

**Fig. 3** zeigt einen eingestellten Ladeverlauf L einer Li-Ionen-Batterie als Auftragung einer Ruhespannung U in Volt gegen eine Ladungsmenge Q in Ah, wobei dieser Ladeverlauf L sowohl die Lebensdauer der Li-Ionen-Batterie (Ladeziel 1) als auch die Stromkosten für die Aufladung (Ladeziel 2) verbessert. Dieser Ladeverlauf L stellt somit einen Kompromiss zwischen beiden Ladezielen dar. In einem Zeitabschnitt A wird der Energiespeicher bis zu einer Ladespannung Ub geladen, welche nur einem Anteil der Ladeschlussspannung Uend entspricht, z. B. nicht mehr als 80 % oder 90 % von Uend. Erst kurz vor Fahrtbeginn wird der Energiespeicher in einem Zeitabschnitt B vollständig aufgeladen, was einer Aufladung bis zu der Ladeschlussspannung Uend entspricht.

Während der Zeitabschnitt A einen preisgünstigen Stromtarif zur weitgehenden Aufladung des Energiespeichers ausnutzt, z. B. einen Nachttarif, wird der Speicher folgend im Zeitabschnitt B zu einem teureren Stromtarif ganz aufgeladen. Diese Ladestrategie bzw. dieses Ladeverhalten weist den Vorteil auf, dass erstens die Aufladung größtenteils preisgünstig erfolgen kann und damit einer Nutzerpriorität auf eine Kostenminimierung hin Rechnung trägt und zusätzlich eine Lebensdauer des Energiespeichers dadurch schont, dass der vollständig aufgeladene Zustand zeitlich nur kurz gehalten wird. Das Energiespeicher-Ladesystem kann den Beginn des Zeitabschnitt B beispielsweise aus einem zuvor von dem Benutzer eingegebenen gewünschten Fahrtbeginn ableiten.

Selbstverständlich ist die vorliegende Erfindung nicht auf die gezeigten Ausführungsbeispiele beschränkt.

So sind auch andere Energiespeicher als Li-Ionen-Speicher verwendbar, wobei das Energiespeicher-Ladesystem an jede Art von Energiespeicher angepasst werden kann.

## Patentansprüche

1. Energiespeicher-Ladesystem für ein Fahrzeug,
- bei dem das Energiespeicher-Ladesystem zumindest für eine Verlängerung einer Lebensdauer mindestens eines Fahrzeug-Energiespeichers, insbesondere Li-Ionen-Batterie, eingerichtet ist,
- bei dem das Energiespeicher-Ladesystem dazu eingerichtet ist, den mindestens einen Fahrzeug-Energiespeicher anhand eines Energiespeicher-Ladeverhaltens aufzuladen, welches zumindest auf die Verlängerung der Lebensdauer des Fahrzeug-Energiespeichers eingerichtet ist,
**dadurch gekennzeichnet,**
- **dass** das Energiespeicher-Ladesystem dazu eingerichtet ist, einen nutzbaren Energiebereich und / oder eine Ladeleistung des Energiespeichers einzuschränken und / oder eine Einschränkung des nutzbaren Energiebereichs und / oder der Ladeleistung zu empfehlen, insbesondere in Abhängigkeit von einem Alterungsgrad des Energiespeichers, und
- **dass** das Energiespeicher-Ladesystem dazu eingerichtet ist, die folgenden Schritte auszuführen:
- Abfragen eines Zeitpunkts eines Beginns einer nächsten Fahrt und vollständiges Aufladen des Energiespeichers erst kurz vor Beginn der nächsten Fahrt,
- Abgeben einer Empfehlung zum Abstellen des Fahrzeugs an einer bestimmten Ladestation, wobei das Energiespeicher-Ladesystem mit einem digitalen Kartensystem funktional verbunden ist, welches Informationen zum Ort von Ladestationen aufweist.

2. Energiespeicher-Ladesystem nach Anspruch 1, **dadurch gekennzeichnet, dass** das Energiespeicher-Ladesystem dazu eingerichtet ist, einem Benutzer mindestens eine Empfehlung für ein Energiespeicher-Ladeverhalten zu geben.

3. Energiespeicher-Ladesystem nach einem der vorhergehenden Ansprüche, **dadurch gekennzeichnet, dass** das Energiespeicher-Ladesystem dazu eingerichtet ist, bei einem Abstellen des Fahrzeugs eine Empfehlung zum Laden des Energiespeichers zu geben.

4. Energiespeicher-Ladesystem nach einem der vorhergehenden Ansprüche, **dadurch gekennzeichnet, dass** das Energiespeicher-Ladesystem dazu eingerichtet ist, die folgenden Schritte auszuführen:
- Auffordern zur Eingabe einer gewünschten Reichweite bis zu einer nächsten Ladestation und folgend
- Aufladen des Energiespeichers gerade so weit, dass die Reichweite sicher gewährleistet wird.

5. Energiespeicher-Ladesystem nach einem der vorhergehenden Ansprüche, **dadurch gekennzeichnet, dass** das Energiespeicher-Ladesystem dazu eingerichtet ist, den folgenden Schritt auszuführen:
- Zulassen oder Empfehlen einer vollständigen Aufladung des Energiespeichers nur für bestimmte Wochentage.

6. Energiespeicher-Ladesystem nach Anspruch 5, **dadurch gekennzeichnet, dass** die bestimmten Wochentage nutzerabhängig unter der Randbedingung auswählbar sind, dass in einem vorbestimmten Zeitintervall ein vorbestimmtes Kontingent an Ladungsenergie nicht überschritten wird.

7. Energiespeicher-Ladesystem nach einem der vorhergehenden Ansprüche, **dadurch gekennzeichnet, dass** das Energiespeicher-Ladesystem dazu eingerichtet ist, die folgenden Schritte auszuführen:
- Auswerten einer Ladehistorie und
- Zumindest teilweise automatisches Erstellen eines an die Ladehistorie angepassten Energiespeicher-Ladeverhaltens.

8. Energiespeicher-Ladesystem nach Anspruch 7, **dadurch gekennzeichnet, dass** der Schritt des Auswertens der Ladehistorie ein Erkennen mindestens eines bisherigen Ladeverhaltens mit einem negativen Einfluss auf die Lebensdauer umfasst und dass sich an den Schritt des Auswertens der Ladehistorie der folgende Schritt anschließt:
- Ausgeben mindestens eines Hinweises bezüglich des mindestens einen erkannten Ladeverhaltens mit dem negativen Einfluss auf die Lebensdauer.

9. Energiespeicher-Ladesystem nach einem der vorhergehenden Ansprüche, **dadurch gekennzeichnet, dass** das Energiespeicher-Ladesystem dazu eingerichtet ist, die folgenden Schritte auszuführen:
- Priorisieren mindestens zweier Ladeziele und
- Aufladen des Energiespeichers in Abhängigkeit von dem Priorisieren.

10. Energiespeicher-Ladesystem nach einem der vorhergehenden Ansprüche, **dadurch gekennzeichnet, dass** das Energiespeicher-Ladesystem dazu eingerichtet ist, die folgenden Schritte auszuführen:
- Eingeben einer geplanten Route einer nächsten Fahrt und
- Aufladen des Energiespeichers in Abhängigkeit zumindest von einer Länge der geplanten Route.

11. Energiespeicher-Ladesystem nach Anspruch 10, **dadurch gekennzeichnet, dass** der Schritt des Aufladens ein Aufladen des Energiespeichers in Abhängigkeit von mindestens einer energetischen Eigenschaft der geplanten Route durchgeführt wird.

## Claims

1. An energy store charging system for a vehicle,
- wherein the energy store charging system is at least configured to prolong the service life of at least one vehicle energy store, more especially an Li-ion battery,
- wherein the energy store charging system is configured to charge the at least one vehicle energy store based on an energy store charging behaviour which is at least configured to prolong the service life of the vehicle energy store,
**characterised in that**
- the energy store charging system is configured to restrict a usable energy range and/or a charging power of the energy store and/or to recommend a restriction of the usable energy range and/or of the charging power, more especially subject to the state of health of the energy store, and
- **in that** the energy store charging system is configured to carry out the following steps:
- to request the time of the start of the next journey and to fully charge the energy store shortly before the start of the next journey,
- to provide a recommendation to stop the vehicle at a particular charging station, the energy store charging system being functionally connected to a digital card system which contains information about the location of charging stations.

2. An energy store charging system according to claim 1, **characterised in that** the energy store charging system is configured to give a user at least one recommendation for an energy store charging behaviour.

3. An energy store charging system according to either of the preceding claims, **characterised in that** the energy store charging system is configured to give a recommendation for charging the energy store when the vehicle has stopped.

4. An energy store charging system according to any one of the preceding claims, **characterised in that** the energy store charging system is configured to carry out the following steps:
- to request the input of a desired range up to the next charging station and subsequently
- to charge the energy store to such an extent that the range is reliably ensured.

5. An energy store charging system according to any one of the preceding claims, **characterised in that** the energy store charging system is configured to carry out the following step:
- to allow or recommend a full charging of the energy store only for particular week days.

6. An energy store charging system according to claim 5, **characterised in that** the particular week days can be selected, subject to the user, under the limiting condition that a predetermined contingent of charging energy is not exceeded within a predetermined time interval.

7. An energy store charging system according to any one of the preceding claims, **characterised in that** the energy store charging system is configured to carry out the following steps:
- to evaluate a charging history and
- to at least partly automatically establish an energy store charging behaviour which is adapted to the charging history.

8. An energy store charging system according to claim 7, **characterised in that** the step of evaluating the charging history comprises the detection of at least one previous charging behaviour with a negative influence on the service life, and **in that** the following step follows the step of evaluating the charging history :
- to output at least one item of information regarding the at least one detected charging behaviour with a negative influence on the service life.

9. An energy store charging system according to any one of the preceding claims, **characterised in that** the energy store charging system is configured to carry out the following steps:
- to prioritise at least two charging objectives and
- to charge the energy store subject to the prioritisation.

10. An energy store charging system according to any one of the preceding claims, **characterised in that** the energy store charging system is configured to carry out the following steps:
- to input a planned route of the next journey and
- to charge the energy store subject to at least a length of the planned route.

11. An energy store charging system according to claim 10, **characterised in that** the step of charging the energy store is carried out subject to at least one energetic characteristic of the planned route.

## Revendications

1. Système de charge d'un accumulateur d'énergie pour un véhicule dans lequel:
- le système de charge de l'accumulateur d'énergie est réalisé au moins pour permettre un prolongement de la durée de vie d'au moins un accumulateur d'énergie du véhicule, en particulier une batterie lithium/ion
- le système de charge de l'accumulateur d'énergie est réalisé pour permettre de charger l'accumulateur d'énergie du véhicule selon un comportement de charge de l'accumulateur d'énergie qui est réalisé au moins pour permettre le prolongement de la durée de vie de l'accumulateur d'énergie du véhicule,
**caractérisé en ce que**
- le système de charge de l'accumulateur d'énergie est réalisé pour limiter la plage d'énergie utilisable et/ou la puissance de charge de l'accumulateur d'énergie et/ou pour recommander une limitation de la plage d'énergie utilisable et/ou de la puissance de charge en particulier en fonction du degré de vieillissement de l'accumulateur d'énergie, et
- le système de charge de l'accumulateur d'énergie est réalisé pour mettre en oeuvre les étapes suivantes consistant à :
- demander le moment du début au prochain déplacement et ne charger totalement l'accumulateur d'énergie que peu avant le début de ce prochain déplacement,
- délivrer une recommandation pour arrêter le véhicule à un poste de charge déterminé, le système de charge de l'accumulateur d'énergie étant relié de manière fonctionnelle à un système cartographique numérique qui comporte des informations concernant la localisation de postes de charge.

2. Système de charge d'un accumulateur d'énergie conforme à la revendication 1,
**caractérisé en ce qu'**
il est réalisé pour donner à un utilisateur au moins une recommandation concernant un comportement de charge de l'accumulateur d'énergie.

3. Système de charge d'un accumulateur d'énergie conforme à l'une des revendications précédentes,
**caractérisé en ce qu'**
il est réalisé pour donner, lors d'un arrêt du véhicule, une recommandation pour charger l'accumulateur d'énergie.

4. Système de charge d'un accumulateur d'énergie conforme à l'une des revendications précédentes,
**caractérisé en ce qu'**
il est réalisé pour mettre en oeuvre les étapes suivantes consistant à :
- demander d'entrer l'autonomie souhaitée jusqu'au prochain poste de charge, puis
- charger l'accumulateur d'énergie exactement suffisamment largement pour permettre de garantir l'autonomie de façon sûre.

5. Système de charge d'un accumulateur d'énergie conforme à l'une des revendications précédentes,
**caractérisé en ce qu'**
il est réalisé pour permettre la mise en oeuvre de l'étape suivante consistant à :
n'autoriser ou recommander la charge totale de l'accumulateur d'énergie que pour des jours déterminés de la semaine.

6. Système de charge d'un accumulateur d'énergie conforme à la revendication 5,
**caractérisé en ce que**
les jours de la semaine déterminés peuvent être choisis en fonction de l'utilisateur sous la condition limite que dans un intervalle de temps prédéfini un quota prédéfini d'énergie de charge ne soit pas dépassé.

7. Système de charge d'un accumulateur d'énergie conforme à l'une des revendications précédentes,
**caractérisé en ce qu'**
il est réalisé pour permettre la mise en oeuvre des étapes suivantes consistant à :
- évaluer l'historique de charge, et
- obtenir au moins partiellement automatiquement un comportement de charge de l'accumulateur d'énergie adapté à l'historique de charge.

8. Système de charge d'un accumulateur d'énergie conforme à l'a revendication 7,
**caractérisé en ce que**
l'étape d'évaluation de l'historique de charge comporte l'identification d'au moins un comportement de charge antérieur ayant eu une influence négative sur la durée de vie, et, à l'étape d'évaluation de l'historique de charge se connecte l'étape suivante consistant à :
- délivrer au moins une indication concernant le comportement de charge ayant eu l'influence négative sur la durée de vie identifiée.

9. Système de charge d'un accumulateur d'énergie conforme à l'une des revendications précédentes,
**caractérisé en ce qu'**
il est réalisé pour permettre la mise en oeuvre des étapes suivantes consistant à :
- donner une priorité à au moins deux objectifs de charge, et
- charger l'accumulateur d'énergie en fonction de cette priorité.

10. Système de charge d'un accumulateur d'énergie conforme à l'une des revendications précédentes,
**caractérisé en ce qu'**
il est réalisé pour permettre la mise en oeuvre des étapes suivantes consistant à :
- délivrer un trajet prévu pour un déplacement ultérieur, et
- charger l'accumulateur d'énergie en fonction d'au moins la longueur du trajet prévu.

11. Système de charge d'un accumulateur d'énergie conforme à la revendication 10,
**caractérisé en ce que**
l'étape de charge est effectuée en mettant en oeuvre la charge de l'accumulateur d'énergie en fonction d'au moins une caractéristique énergétique du trajet prévu.
